# EUROPEAN PATENT APPLICATION

(11) **EP 4 804 301 A1**
(43) Date of publication of application: **09.09.2026**
(21) Application number: 24885354.1
(22) Date of filing: 03.10.2024
(51) Int. Cl.: H01M 50/131, H01M 10/052, H01M 10/0587, H01M 10/613, H01M 10/643, H01M 10/6551, H01M 50/107, H01M 50/119, H01M 50/152

(54) **CYLINDRICAL BATTERY**

(30) Priority: 31.10.2023 JP 2023187135
(71) Applicant: Panasonic Intellectual Property Management Co., Ltd., Kadoma-shi, Osaka 571-0057 (JP)
(72) Inventor: ADACHI, Soh, Osaka 571-0057 (JP)
(74) Representative: Eisenführ Speiser
(86) International application number: PCT/JP2024/035419
(87) International publication number: WO 2025/094579

(57) **Abstract**

Provided is a cylindrical battery comprising: an electrode body in which a positive electrode and a negative electrode are wound with a separator therebetween; a cylindrical outer can (20) that has a bottom part (21) and accommodates the electrode body; and a sealing body that closes an opening in the outer can (20). The cylindrical battery is characterized in that the surface area of an outer surface (21A) of the bottom part (21) is 1.2 times or more the projection area of the outer surface (21A) of the bottom part (21).

## Description

### TECHNICAL FIELD

The present disclosure relates to a circular cylindrical battery.

### BACKGROUND

In general, a circular cylindrical battery comprises an electrode assembly in which a positive electrode and a negative electrode are wound with a separator therebetween, a housing can of a circular cylindrical shape which houses the electrode assembly, and a sealing assembly of a circular disc shape which closes an opening of the housing can. Patent Literature 1 discloses a circular cylindrical battery in which an engraving is provided on an outer surface of a bottom of the housing can. Patent Literature 1 describes that, by providing the engraving on the outer surface of the bottom of the housing can, the location of the engraving can rupture when an internal pressure inside the battery increases, and gas inside the battery can be exhausted.

### CITATION LIST

### PATENT LITERATURE

Patent Literature 1: JP H11-144705 A

### SUMMARY

With the increases in the capacity of the battery in the recent years, an amount of generated heat during the use of the battery has also increased. When the amount of generated heat increases and the temperature inside the battery increases, there is a risk of reduction of the battery performance. Thus, improving heat dissipation property of the battery is an important issue.

According to one aspect of the present disclosure, there is provided a circular cylindrical battery comprising: an electrode assembly in which a positive electrode and a negative electrode are wound with a separator therebetween; a housing can of a circular cylindrical shape, that has a bottom portion and that houses the electrode assembly; and a sealing assembly that closes an opening of the housing can, wherein a surface area of an outer surface of the bottom portion is greater than or equal to 1.2 times a projected area of the outer surface of the bottom portion.

According to a circular cylindrical battery of an aspect of the present disclosure, the heat dissipation property can be improved. As a result, the increase in temperature during the use of the battery can be suppressed, and the battery performance can be easily secured.

### BRIEF DESCRIPTION OF DRAWINGS

FIG. 1 is a cross-sectional diagram along an axial direction of a circular cylindrical battery according to an embodiment of the present disclosure.
FIG. 2 is a plan view of a bottom portion of the circular cylindrical battery according to an embodiment of the present disclosure.
FIG. 3 is a cross-sectional diagram along an axial direction of the bottom portion of the circular cylindrical battery according to an embodiment of the present disclosure.
FIG. 4 is a plan view of a bottom portion of a circular cylindrical battery according to an embodiment of the present disclosure.
FIG. 5 is a plan view of a bottom portion of a circular cylindrical battery according to an embodiment of the present disclosure.

### DESCRIPTION OF EMBODIMENTS

A circular cylindrical battery according to embodiments of the present disclosure will now be described in detail with reference to the drawings. The embodiments described below are merely exemplary, and the present disclosure is not limited to the embodiments described below. Configurations obtained by selectively combining constituent elements of the embodiments described below are within the scope of the present disclosure.

### [First Embodiment]

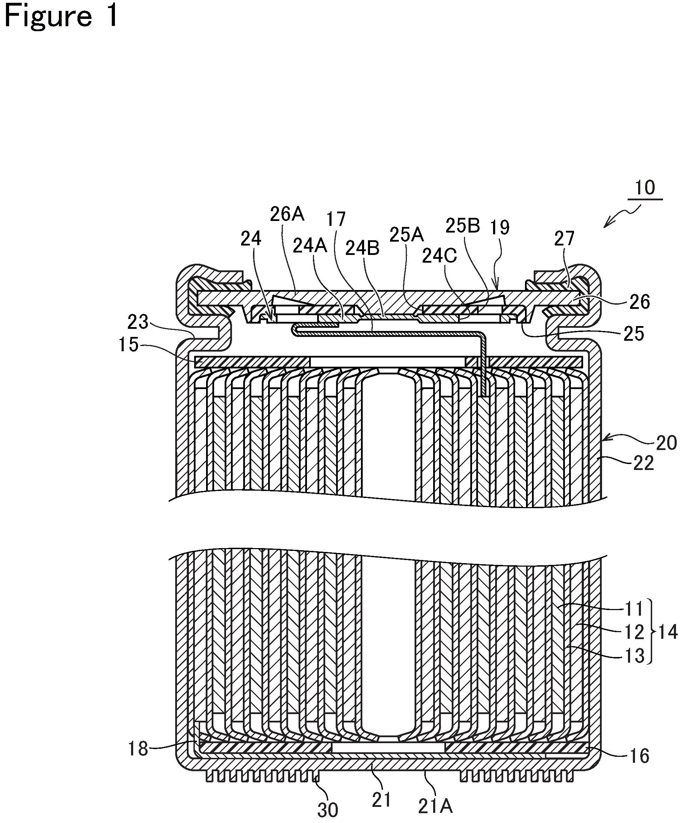

FIG. 1 is a diagram schematically showing a cross section of a circular cylindrical battery 10 according to a first embodiment of the present disclosure. As illustrated in FIG. 1, the circular cylindrical battery 10 comprises an electrode assembly 14, an electrolyte (not shown), and a housing can 20 which houses the electrode assembly 14 and the electrolyte. The electrode assembly 14 comprises a positive electrode 11, a negative electrode 12, and a separator 13, and has a wound structure in which the positive electrode 11 and the negative electrode 12 are wound in a spiral shape with the separator 13 therebetween. The housing can 20 is a metal container having a circular cylindrical shape with a bottom portion and having one end side in an axial direction opened, and the opening of the housing can 20 is closed by a sealing assembly 19. In the following, the side in an axial direction (height direction) of the housing can 20 near the sealing assembly 19 will be referred to as an "upper side", and the side in the axial direction of the housing can 20 near a bottom portion 21 will be referred to as a "lower side".

The electrolyte has lithium ion conductivity. The electrolyte may be a liquid-state electrolyte (electrolyte solution) or a solid electrolyte.

The liquid-state electrolyte (electrolyte solution) contains a non-aqueous solvent and an electrolyte salt dissolved in the non-aqueous solvent. For the non-aqueous solvent, for example, esters, ethers, nitriles, amides, or a mixture solvent of two or more of these solvents may be employed. Examples of the non-aqueous solvent include ethylene carbonate (EC), ethylmethyl carbonate (EMC), dimethyl carbonate (DMC), diethyl carbonate (DEC), and a mixture solvent of these solvents. The non-aqueous solvent may include a halogen-substituted product in which at least a part of hydrogens of the solvent described above is substituted with a halogen atom such as fluorine (for example, fluoroethylene carbonate or the like). For the electrolyte salt, for example, a lithium salt such as LiPF₆ is employed.

As the solid electrolyte, for example, there may be employed a solid-state or gel-state polymer electrolyte, an inorganic solid electrolyte, or the like. As the inorganic solid electrolyte, for example, materials known in the field of an all-solid-state lithium ion secondary battery or the like (such as, for example, an oxide-based solid electrolyte, a sulfide-based solid electrolyte, a halogen-based solid electrolyte) may be employed. For example, the polymer electrolyte contains a lithium salt and a matrix polymer, or contains a non-aqueous solvent, the lithium salt, and the matrix polymer. As the matrix polymer, for example, a polymer material which absorbs the non-aqueous solvent and forms a gel is used. As the polymer material, there may be exemplified a fluororesin, an acrylic resin, a polyether resin, or the like.

The positive electrode 11, the negative electrode 12, and the separator 13 forming the electrode assembly 14 are each a band-shaped, elongated member, and are wound in the spiral shape, so as to be alternately layered in a radial direction of the electrode assembly 14. The negative electrode 12 is formed in a size slightly larger than the positive electrode 11 in order to prevent precipitation of lithium. That is, the negative electrode 12 is formed to be longer in a longitudinal direction and in a width direction (short-side direction) than the positive electrode 11. The separator 13 is formed in a size slightly larger at least than the positive electrode 11, and two separators 13 are disposed to sandwich the positive electrode 11. The circular cylindrical battery 10 comprises insulating plates 15 and 16 disposed respectively above and below the electrode assembly 14.

The positive electrode 11 comprises a positive electrode core and a positive electrode mixture layer formed on the positive electrode core. For the positive electrode core, there may be employed a foil of a metal which is stable within a potential range of the positive electrode 11 such as aluminum and an aluminum alloy, a film on a surface layer of which the metal is disposed, or the like. The positive electrode mixture layer contains a positive electrode active material, a conductive agent, and a binder, and is desirably formed on both surfaces of the positive electrode core except for an exposed part of the positive electrode core (not shown) to which a positive electrode lead 17 is welded. The positive electrode 11 can be produced, for example, by applying a positive electrode mixture slurry including the positive electrode active material, the conductive agent, and the binder on the positive electrode core, drying the applied film, and compressing the dried film, to thereby form the positive electrode mixture layers on both surfaces of the positive electrode core.

The positive electrode mixture layer contains, as the positive electrode active material, a lithium-metal composite oxide of a particulate form. The lithium-metal composite oxide is a composite oxide containing, in addition to Li, a metal element such as Co, Mn, Ni, Al, and the like. The metal element forming the lithium-metal composite oxide is, for example, at least one element selected from Mg, Al, Ca, Sc, Ti, V, Cr, Mn, Fe, Co, Ni, Cu, Zn, Ga, Ge, Y, Zr, Sn, Sb, W, Pb, and Bi. Of these elements, the lithium-metal composite oxide desirably contains at least one element selected from Co, Ni, and Mn. Examples of the desirable composite oxide include a lithium-metal composite oxide containing Ni, Co, and Mn, and a lithium-metal composite oxide containing Ni, Co, and Al.

As the conductive agent contained in the positive electrode mixture layer, there may be exemplified carbon materials such as carbon black such as acetylene black and Ketjenblack, graphite, carbon nanotubes (CNT), carbon nanofiber, graphene or the like. As the binder contained in the positive electrode mixture layer, there may be exemplified a fluororesin such as polytetrafluoroethylene (PTFE), polyvinylidene fluoride (PVDF), or the like, polyacrylonitrile (PAN), polyimide, an acrylic resin, polyolefin, or the like. Alternatively, these resins may be employed along with carboxymethylcellulose (CMC) or a salt thereof, polyethylene oxide (PEO), or the like.

The negative electrode 12 comprises a negative electrode core, and a negative electrode mixture layer formed on the negative electrode core. For the negative electrode core, there may be employed a foil of a metal which is stable within a potential range of the negative electrode 12 such as copper, a copper alloy, or the like, a film on a surface layer of which the metal is placed, or the like. The negative electrode mixture layer contains a negative electrode active material and a binder, and a conductive agent as necessary, and is desirably formed on both surfaces of the negative electrode core except for an exposed part of the negative electrode core (not shown) to which a negative electrode lead 18 is welded. The negative electrode 12 can be produced by applying a negative electrode mixture slurry including the negative electrode active material and the binder or the like on a surface of the negative electrode core, drying the applied film, and compressing the dried film, to thereby form the negative electrode mixture layers on both surfaces of the negative electrode core.

The negative electrode mixture layer in general contains, as the negative electrode active material, a carbon material which reversibly occludes and releases lithium ions. Examples of a desirable carbon material include graphite such as natural graphite such as flaky graphite, massive graphite, and amorphous graphite, and artificial graphite such as massive artificial graphite (MAG) and graphitized meso-phase carbon microbeads (MCMB). In addition, for the negative electrode active material, a material which includes at least one of an element which forms an alloy with Li such as Si and Sn, and a material which contains the element may be employed. Of these, a composite material which contains Si is desirable.

Examples of a desired composite oxide which contains Si include a material in which fine Si particles are dispersed in a SiO₂ phase or in a silicate phase such as lithium silicate, and a material in which the fine Si particles are dispersed in an amorphous carbon phase. On the particles surface of the composite material, for example, a conductive layer such as a carbon coating is formed. The combinational use of the carbon material and the Si-containing composite material as the negative electrode active material is desirable from the viewpoint of achieving both high capacity and high endurance of the battery.

As the binder contained in the negative electrode mixture layer, similar to the positive electrode mixture layer, a fluororesin, PAN, polyimide, an acrylic resin, polyolefin, or the like may be employed, but desirably, styrene-butadiene rubber (SBR) is employed. Desirably, the negative electrode mixture layer further contains CMC or a salt thereof, polyacrylic acid (PAA) or a salt thereof, polyvinyl alcohol (PVA), or the like. In particular, a combinational use of the SBR and the CMC or a salt thereof or the PAA or a salt thereof is desirable. The negative electrode mixture layer may further contain a conductive agent such as CNT.

For the separator 13, a porous sheet having ion permeability and an insulating property is employed. Specific examples of the porous sheet include a microporous thin film, a woven fabric, a non-woven fabric, or the like. As a material forming the separator 13, desirably, polyolefin such as polyethylene and polypropylene, cellulose, or the like is desirably employed. The separator 13 may have a single-layer structure or a multilayer structure. On a surface of the separator 13, a resin layer of a high heat resistivity, such as an aramid resin, or the like, may be formed. A filler layer containing a filler of inorganic materials may be formed at an interface between the separator 13 and the positive electrode 11 and/or at an interface between the separator 13 and the negative electrode 12.

The positive electrode lead 17 is connected to the positive electrode 11, and the negative electrode lead 18 is connected to a winding end side of the negative electrode 12. The positive electrode lead 17 extends through a through hole of the insulating plate 15 toward the side of the sealing assembly 19, and the negative electrode lead 18 extends to the side of the bottom portion 21 of the housing can 20 through an outer side of the insulating plate 16. The positive electrode lead 17 is connected to a lower surface of an internal terminal plate 24 of the sealing assembly 19 by welding or the like, and the sealing assembly 19 serves as a positive electrode terminal. The negative electrode lead 18 is connected to an inner surface of the bottom portion 21 of the housing can 20 made of a metal by welding or the like, and the housing can 20 serves as a negative electrode terminal.

The housing can 20 is a metal container of a circular cylindrical shape, with an upper side in the axial direction opened. A material of the housing can 20 is formed from, for example, a metal having iron as a primary constituent, from the viewpoint of achieving both machinability and heat dissipation property. The housing can 20 comprises the bottom portion 21 and a side wall portion 22. As will be described later in detail, a plurality of first protrusions 30 having an approximate annular shape are formed on an outer surface 21A of the bottom portion 21, and a surface area of the outer surface 21A of the bottom portion 21 is greater than or equal to 1.2 times a projected area of the outer surface 21A of the bottom portion 21.

A gasket 27 is provided between the housing can 20 and the sealing assembly 19, and hermiticity inside the battery and insulation between the housing can 20 and the sealing assembly 19 are secured. On the housing can 20, a groove portion 23 in which a part of the side wall portion 22 projects toward the inner side and which supports the sealing assembly 19 is formed. The groove portion 23 is desirably formed in an annular shape along a circumferential direction of the housing can 20, and supports the sealing assembly 19 with an upper surface thereof. The sealing assembly 19 is fixed at an upper part of the housing can 20 by the groove portion 23 and an opening end of the housing can 20 crimped with respect to the sealing assembly 19.

The sealing assembly 19 is a member of a circular disc shape having a safety vent member. The sealing assembly 19 has a structure in which the internal terminal plate 24, an insulating member 25, and an external terminal plate 26 are layered in this order from the side of the electrode assembly 14. The internal terminal plate 24 is a metal plate including an outer circumferential portion 24A which is thick and to which the positive electrode lead 17 is connected, and a center portion 24B which is thin and which is disconnected from the outer circumferential portion 24A when an internal pressure of the battery exceeds a predetermined threshold. A plurality of vent holes 24C are formed on the outer circumferential portion 24A.

The external terminal plate 26 is disposed opposing the internal terminal plate 24 with the insulating member 25 therebetween. An opening 25A is formed at a central part in a radial direction of the insulating member 25, and a vent hole 25B is formed on the insulating member 25 at a portion overlapping the vent hole 24C of the internal terminal plate 24. The external terminal plate 26 has a vent member 26A which ruptures when the internal pressure of the circular cylindrical battery 10 exceeds a predetermined threshold, and the vent member 26A is connected to the center portion 24B of the internal terminal plate 24 by welding or the like. The insulating member 25 insulates portions other than contact portions between the center portion 24B and the vent member 26A. An outer circumferential portion of the external terminal plate 26 surrounding the vent member 26A is held, via the gasket 27, between a crimped portion, formed by bending an opening of the housing can 20 toward the inner side, and the groove portion 23.

The vent member 26A has a joint portion which is provided at a center in the radial direction and which protrudes toward the inner side of the battery, and a thin-thickness portion formed around the joint portion, and is formed at a central part in the radial direction of the external terminal plate 26. The joint portion of the vent member 26A extends through the opening 25A of the insulating member 25, and is joined to the center portion 24B. When abnormality occurs in the circular cylindrical battery 10 and the internal pressure is increased, the external terminal plate 26 is pressed upward by high-temperature gas which is generated, causing the internal terminal plate 24 to rupture and the center portion 24B to be disconnected from the outer circumferential portion 24A, and the vent member 26A deforms to protrude toward the outer side of the battery. With this process, a current path in the sealing assembly 19 is shut out. When the internal pressure of the circular cylindrical battery 10 further increases after the current path is shut out, the thin-thickness portion of the vent member 26A ruptures, and an exhaust port of gas is formed on the external terminal plate 26.

The structure of the sealing assembly 19 is not limited to the structure illustrated in FIG. 1. Alternatively, the sealing assembly 19 may have a layered structure including two vent members, or may have a sealing assembly cap of a protruded shape, which covers the vent member.

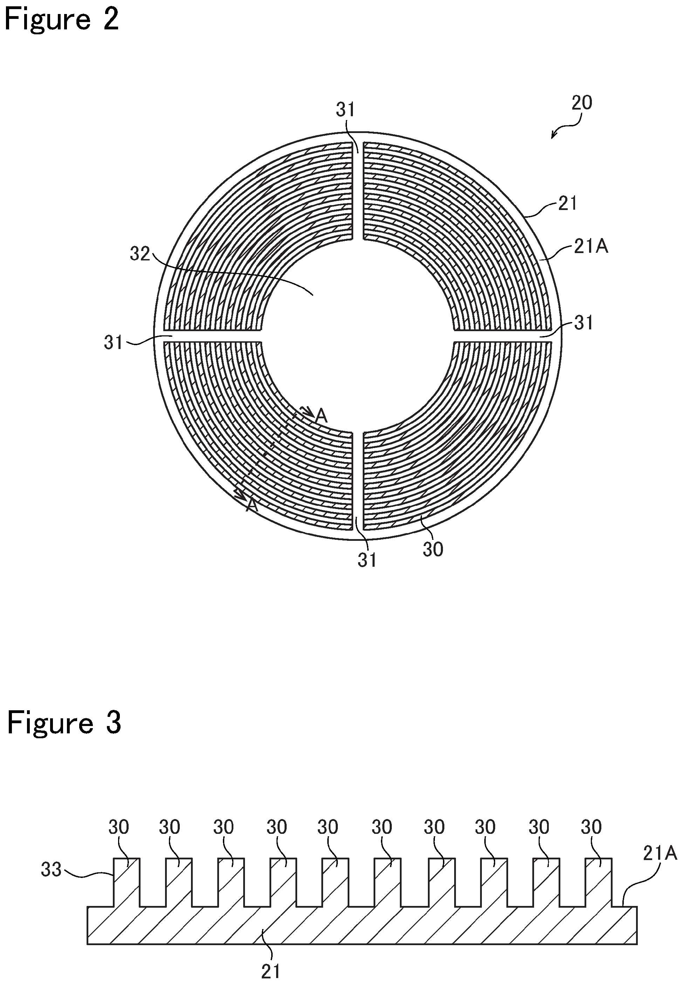

Next, with further reference to FIGs. 2 and 3, a structure of the housing can 20 will be described in detail. FIG. 2 is a plan view of the outer surface 21A of the bottom portion 21 of the housing can 20, and FIG. 3 is a cross-sectional diagram along a line AA of FIG. 2 and is a cross-sectional diagram in the axial direction of the bottom portion 21 of the housing can 20. In FIG. 2, an area in which the first protrusion 30 is provided is shown with a hatching.

As shown in FIG. 2, on the outer surface 21A of the bottom portion 21, a plurality of first protrusions 30 having an approximate annular shape are provided. With this configuration, a surface area of the outer surface 21A of the bottom portion 21 can be set to be greater than or equal to 1.2 times a projected area of the outer surface 21A of the bottom portion 21. As a result of studies, the present inventors have found that the surface area of the outer surface 21A of the bottom portion 21 significantly affects the heat dissipation property of the circular cylindrical battery 10. By setting the surface area of the outer surface 21A of the bottom portion 21 to be greater than or equal to 1.2 times the projected area of the outer surface 21A of the bottom portion 21, an area of the housing can 20 contacting the outside air can be increased and the heat inside the battery can be discharged to the outside air via the housing can 20 to a greater extent. As a result, the increase in the temperature when the battery is used can be suppressed, and the battery performance can be easily secured. In other words, when the surface area of the outer surface 21A of the bottom portion 21 is less than 1.2 times the projected area of the outer surface 21A of the bottom portion 21, the heat dissipation property of the circular cylindrical battery 10 cannot be sufficiently improved. The first protrusion 30 can be formed, for example, by press-machining the bottom portion 21.

The number of the first protrusions 30 can be suitably set within a range which allows the surface area of the outer surface 21A of the bottom portion 21 to be greater than or equal to 1.2 times the projected area of the outer surface 21A of the bottom portion 21, but is desirably greater than or equal to 3, and is desirably greater than or equal to 5. In the present embodiment, ten first protrusions 30 are provided on the outer surface 21A of the bottom portion 21 with spacing in the radial direction.

In the present disclosure, the first protrusion 30 having an approximate annular shape includes a first protrusion 30 having an annular shape and also a first protrusion 30 having a shape with partial discontinuity. For example, the first protrusion 30 may have an annular shape with discontinuity (discontinuities) at one or a plurality of locations. When a length of an entire circumference of the annular shape is 100, a total of the lengths of the continuous portions of the first protrusion 30 is desirably greater than or equal to 70, is more desirably greater than or equal to 80, and is further desirably greater than or equal to 90.

It is sufficient that the surface area of the outer surface 21A of the bottom portion 21 is greater than or equal to 1.2 times the projected area of the outer surface 21A of the bottom portion 21, but the surface area is desirably greater than or equal to 1.5 times the projected area, is more desirably greater than or equal to 2.0 times the projected area, and is further desirably greater than or equal to 2.5 times the projected area. By setting the surface area of the outer surface 21A of the bottom portion 21 to be greater than or equal to 1.5 times the projected area of the outer surface 21A of the bottom portion 21, the area of the housing can 20 contacting the outside air can be further increased, and the heat inside the battery can more easily be discharged to the outside air via the housing can 20. An upper limit of the surface area of the outer surface 21A of the bottom portion 21 is, for example, 10 times the projected area of the outer surface 21A of the bottom portion 21. When the surface area of the outer surface 21A of the bottom portion 21 exceeds 10 times the projected area of the outer surface 21A of the bottom portion 21, the strength of the housing can 20 is reduced, and there may be cases in which the bottom portion 21 deforms when the internal pressure of the circular cylindrical battery 10 is excessively increased. Thus, the surface area of the outer surface 21A of the bottom portion 21 is desirably greater than or equal to 1.5 times the projected area of the outer surface 21A of the bottom portion 21 and less than or equal to 10 times the projected area, is more desirably greater than or equal to 2.0 times and less than or equal to 10 times the projected area, and is further desirably greater than or equal to 2.5 times and less than or equal to 10 times the projected area. The projected area of the outer surface 21A of the bottom portion 21 means an area of the outer surface 21A of the bottom portion 21 in a plan view viewing the outer surface 21A of the bottom portion 21 from above, along the axial direction of the housing can 20.

A percentage of an area occupied by the first protrusions 30 with respect to an area of the outer surface 21A of the bottom portion 21 in the plan view viewing the outer surface 21A of the bottom portion 21 from above is desirably greater than or equal to 20%, is more desirably greater than or equal to 25%, and is further desirably greater than or equal to 30%. By setting the percentage of the area occupied by the first protrusions 30 with respect to the area of the outer surface 21A of the bottom portion 21 to be greater than or equal to 20%, it becomes easier to increase the surface area of the outer surface 21A of the bottom portion 21. As a result, the area of the housing can 20 contacting the outside air can be further increased, and the heat inside the battery can more easily be discharged to the outside air via the housing can 20. In addition, from the viewpoint of increasing the surface area of the outer surface 21A of the bottom portion 21 while securing the strength of the housing can 20, the percentage of the area occupied by the first protrusions 30 with respect to the area of the outer surface 21A of the bottom portion 21 in the plan view viewing the outer surface 21A of the bottom portion 21 from above is desirably less than or equal to 50%. Thus, the percentage of the area occupied by the first protrusions 30 with respect to the area of the outer surface 21A of the bottom portion 21 is desirably greater than or equal to 20% and less than or equal to 50%, is more desirably greater than or equal to 25% and less than or equal to 50%, and is further desirably greater than or equal to 30% and less than or equal to 50%.

As shown in FIG. 2, four slits 31 which are provided along the radial direction and which divide the first protrusions 30 in the circumferential direction are provided on the outer surface 21A of the bottom portion 21. By providing the slit 31, the outside air which is accumulated at an outer side of the bottom portion 21 flows via the slit 31 to the central part side of the bottom portion 21. As a result, it becomes easier for the heat at the central part side of the bottom portion 21 to be discharged to the outside air. Therefore, by providing the slit 31 on the outer surface 21A of the bottom portion 21, the heat dissipation property of the circular cylindrical battery 10 can be further improved.

The slits 31 are desirably provided with equal angular spacing with each other in the circumferential direction. By providing the slits 31 with the equal angular spacing with each other in the circumferential direction, the flow of the outside air becomes smooth near the outer surface 21A of the bottom portion 21. As a result, the heat of the bottom portion 21 can more easily be discharged to the outside air.

In the present embodiment, four slits 31 are provided, but the number of the slits 31 is not limited to this number. The number of slits 31 may be less than or equal to 3, or may be greater than or equal to 5. From the viewpoint of achieving the smooth flow of the outside air via the slit 31, the number of the slits 31 is desirably greater than or equal to 4. Further, from the viewpoint of securing the surface area of the outer surface 21A of the bottom portion 21, the number of the slits 31 is desirably less than or equal to 8. Thus, the number of the slits 31 is desirably greater than or equal to 4 and less than or equal to 8.

A length in the circumferential direction (width) of the slit 31 is not particularly limited, and is, for example, greater than or equal to 0.1 mm and less than or equal to 5.0 mm. The length in the circumferential direction of the slit 31 may be constant in the radial direction, or may vary in the radial direction. For example, the length in the circumferential direction of the slit 31 may be reduced toward an inner side in the radial direction. In addition, while it is desirable that the slit 31 divides all of the first protrusions 30 in the circumferential direction, it may be also possible that the slit 31 does not divide a part of the first protrusions 30 in the circumferential direction. That is, a part of the first protrusions 30 may have an annular shape continuous in the circumferential direction.

As shown in FIG. 2, at a central part of the outer surface 21A of the bottom portion 21, a flat region 32 having no first protrusion 30 is provided. The flat region 32 has a shape of a true circle in the plan view viewing the outer surface 21A of the bottom portion 21 from above. The negative electrode lead 18 is joined by welding or the like to the central part of the inner surface of the bottom portion 21. Because of this, by providing the flat region 32 at the central part of the outer surface 21A of the bottom portion 21, the welding operation can be facilitated, and productivity can be improved. No particular limitation is imposed on a diameter of the flat region 32, and the diameter is, for example, greater than or equal to 20% of a diameter of the outer surface 21A of the bottom portion 21, and less than or equal to 60%.

As shown in FIG. 3, a height of the first protrusion 30 is desirably greater than or equal to 0.01 mm, is more desirably greater than or equal to 0.1 mm, and is further desirably greater than or equal to 0.3 mm. By setting the height of the first protrusion 30 to be greater than or equal to 0.01 mm, the surface area of the outer surface 21A of the bottom portion 21 can more easily be increased. As a result, the area of the housing can 20 contacting the outside air can be further increased, and the heat inside the battery can more easily be discharged to the outside air via the housing can 20. An upper limit of the height of the first protrusion 30 is, for example, 5.0 mm. Thus, the height of the first protrusion 30 is desirably greater than or equal to 0.01 mm and less than or equal to 5.0 mm, is more desirably greater than or equal to 0.1 mm and less than or equal to 5.0 mm, and is further desirably greater than or equal to 0.3 mm and less than or equal to 5.0 mm. The height of the first protrusion 30 refers to a length along the axial direction of the housing can 20 from the outer surface 21A of the bottom portion 21 to a top of the first protrusion 30.

In the present embodiment, the heights of all of the first protrusion 30 are approximately uniform, but alternatively, the heights of the first protrusions 30 may vary within a plane. For example, a height of a first protrusion 30 provided at an inner side in the radial direction may be set to be larger than a height of a first protrusion 30 provided at an outer side in the radial direction. In this configuration, the outside air can more easily flow into the central part side of the bottom portion 21.

A length in a radial direction (width) of the first protrusion 30 is desirably greater than or equal to 0.01 mm. By setting the length in the radial direction of the first protrusion 30 to be greater than or equal to 0.01 mm, it becomes easier to secure the strength of the first protrusion 30. In addition, the length in the radial direction of the first protrusion 30 is desirably less than or equal to 5.0 mm. When the length in the radial direction of the first protrusion 30 exceeds 5.0 mm, it becomes difficult to provide a sufficient number of the first protrusions 30 on the outer surface 21A of the bottom portion 21. As a result, it becomes difficult to increase the surface area of the outer surface 21A of the bottom portion 21. Thus, the length in the radial direction of the first protrusion 30 is desirably greater than or equal to 0.01 mm and less than or equal to 5.0 mm.

In the present embodiment, the lengths in the radial direction of all of the first protrusions 30 are approximately uniform, but alternatively, the lengths in the radial direction of the first protrusions 30 may vary within a plane. For example, a length in the radial direction of a first protrusion 30 provided at an inner side in the radial direction may be set to be larger than a length in the radial direction of a first protrusion 30 provided at an outer side in the radial direction. Alternatively, first protrusions having a large radial direction length and first protrusions 30 having a small radial direction length may be alternately disposed with spacing therebetween in the radial direction.

As shown in FIG. 3, the first protrusion 30 has an approximate quadrangular shape in a cross-sectional view in the axial direction. That is, an inclined surface 33 of the first protrusion 30 extends along the axial direction. The approximate quadrangular shape includes a shape with rounded corners of the first protrusion 30.

The shape of the first protrusion 30 is not limited to this shape. Alternatively, the shape of the first protrusion 30 may have, for example, an approximate triangular shape in the cross-sectional view in the axial direction. That is, the inclined surface 33 of the first protrusion 30 may extend along a direction inclined with respect to the axial direction. When the cross-sectional shape of the first protrusion 30 has the triangular shape, the first protrusions 30 may be provided adjacent to each other, without providing spacing in the radial direction.

Moreover, in the example configuration illustrated in FIG. 3, the inner surface of the bottom portion 21 is approximately flat, but the present embodiment is not limited to such a configuration. For example, a recess may be formed on the inner surface of the bottom portion 21, at a position corresponding to the first protrusion 30.

### [Second Embodiment]

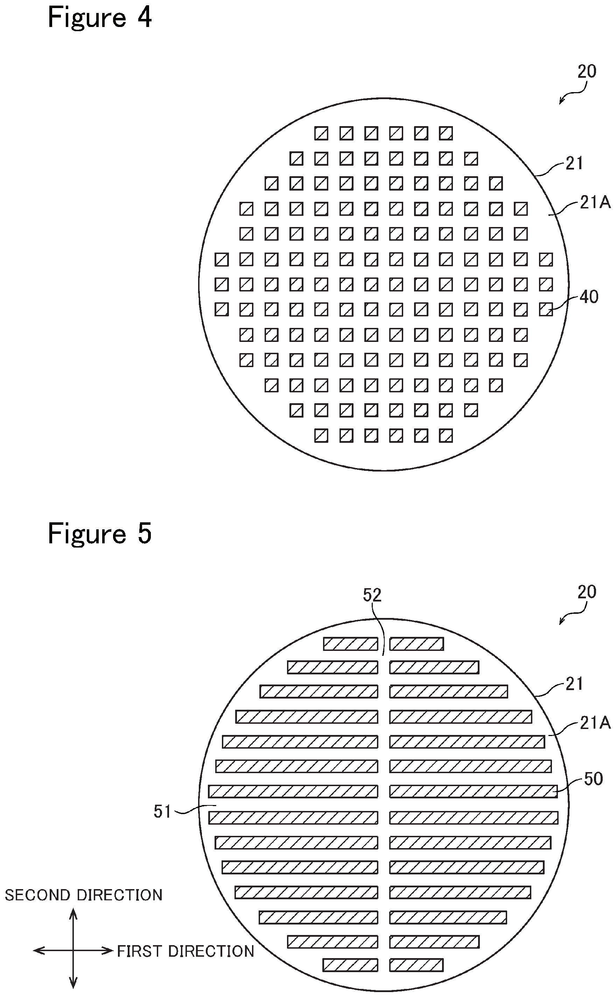

With reference to FIG. 4, the circular cylindrical battery 10 according to a second embodiment of the present disclosure will now be described. FIG. 4 is a plan view of the outer surface 21A of the bottom portion 21 of the housing can 20. In FIG. 4, an area in which a second protrusion 40 is provided is shown with a hatching. In the following, structures common with the first embodiment will be assigned the same reference numerals, repeated description will not be given, and a difference from the first embodiment will primarily be described.

As shown in FIG. 4, a plurality of second protrusions 40 are present in a scattered manner on the outer surface 21A of the bottom portion 21. With this configuration, the surface area of the outer surface 21A of the bottom portion 21 can be set to be greater than or equal to 1.2 times the projected area of the outer surface 21A of the bottom portion 21. Similar to the first protrusion 30, the second protrusion 40 can be formed, for example, by press-machining the bottom portion 21.

The second protrusions 40 are desirably disposed periodically. In the present embodiment, in the plan view viewing the outer surface 21A of the bottom portion 21 from above, the second protrusions 40 are disposed on lattice points of a quadrangular lattice. By disposing the second protrusions 40 periodically, the flow of the outside air near the bottom portion 21 can be smoothened, and the heat of the bottom portion 21 can more easily be discharged to the outside air. Alternatively, the second protrusions 40 may be disposed on lattice points of a triangular lattice or a hexagonal lattice.

In the present embodiment, as shown in FIG. 4, the second protrusions 40 are provided over an approximately entire region of the outer surface 21A of the bottom portion 21, but the present embodiment is not limited to this configuration. The second protrusions 40 may be provided only in a partial region of the outer surface 21A of the bottom portion 21, within a range in which the surface area of the outer surface 21A of the bottom portion 21 can be set to be greater than or equal to 1.2 times the projected area of the outer surface 21A of the bottom portion 21. For example, a flat region having no second protrusion 40 may be provided at a central part of the outer surface 21A of the bottom portion 21.

In the plan view viewing the outer surface 21A of the bottom portion 21 from above, the second protrusion 40 has an approximate quadrangular shape. Alternatively, the second protrusion 40 mya have an approximate true circular shape. Alternatively, the second protrusion 40 may have a tapered shape in which the cross section is reduced toward a tip side of the second protrusion 40, that is, toward a lower side in the axial direction.

A percentage of an area occupied by the second protrusions 40 with respect to the area of the outer surface 21A of the bottom portion 21 in the plan view viewing the outer surface 21A of the bottom portion 21 from above is desirably greater than or equal to 20%, is more desirably greater than or equal to 25%, and is further desirably greater than or equal to 30%. By setting the percentage of the area occupied by the second protrusions 40 with respect to the area of the outer surface 21A of the bottom portion 21 to be greater than or equal to 20%, it becomes easier to increase the surface area of the outer surface 21A of the bottom portion 21. As a result, the area of the housing can 20 contacting the outside air can be increased, and the heat inside the battery can more easily be discharged to the outside air via the housing can 20. In addition, from the viewpoint of increasing the surface area of the outer surface 21A of the bottom portion 21 while securing the strength of the housing can 20, the percentage of the area occupied by the second protrusions 40 with respect to the area of the outer surface 21A of the bottom portion 21 in the plan view viewing the outer surface 21A of the bottom portion 21 from above is desirably less than or equal to 50%. Thus, the percentage of the area occupied by the second protrusions 40 with respect to the area of the outer surface 21A of the bottom portion 21 is desirably greater than or equal to 20% and less than or equal to 50%, is more desirably greater than or equal to 25% and less than or equal to 50%, and is further desirably greater than or equal to 30% and less than or equal to 50%.

Similar to the height of the first protrusion 30, a height of the second protrusion 40 is desirably greater than or equal to 0.01 mm, is more desirably greater than or equal to 0.1 mm, and is further desirably greater than or equal to 0.3 mm. By setting the height of the second protrusion 40 to be greater than or equal to 0.01 mm, it becomes easier to increase the surface area of the outer surface 21A of the bottom portion 21. As a result, the area of the housing can 20 contacting the outside air can be further increased, and the heat inside the battery can more easily be discharged to the outside air via the housing can 20. In addition, an upper limit of the height of the second protrusion 40 is, for example, 5.0 mm. Thus, the height of the second protrusion 40 is desirably greater than or equal to 0.01 mm and less than or equal to 5.0 mm, is more desirably greater than or equal to 0.1 mm and less than or equal to 5.0 m, and is further desirably greater than or equal to 0.3 mm and less than or equal to 5.0 mm.

### [Third Embodiment]

With reference to FIG. 5, the circular cylindrical battery 10 according to a third embodiment of the present disclosure will now be described. FIG. 5 is a plan view of the outer surface 21A of the bottom portion 21 of the housing can 20. In FIG. 5, an area in which a third protrusion 50 is provided is shown with a hatching. In the following, structures common with the first and second embodiments are assigned the same reference numerals, repeated description will not be given, and a difference from the first and second embodiments will primarily be described.

As shown in FIG. 5, a plurality of third protrusion 50 which extend along a first direction, which is arbitrary, are formed on the outer surface 21A of the bottom portion 21. The third protrusions 50 are disposed with predetermined spacing therebetween along a second direction orthogonal to the first direction in the plan view viewing the outer surface 21A of the bottom portion 21 from above. With this configuration, a plurality of first slits 51 which extend along the second direction are formed between adjacent third protrusions 50. By providing the plurality of third protrusions 50 on the outer surface 21A of the bottom portion 21, it becomes possible to set the surface area of the outer surface 21A of the bottom portion 21 to be greater than or equal to 1.2 times the projected area of the outer surface 21A of the bottom portion 21. Similar to the first protrusion 30 and the second protrusion 40, the third protrusion 40 can be formed, for example, by press-machining the bottom portion 21.

The spacing of the third protrusions 50 in the second direction, that is, a length in the second direction (width) of the first slit 51, can be suitably set within a range in which the surface area of the outer surface 21A of the bottom portion 21 can be set to be greater than or equal to 1.2 times the projected area of the outer surface 21A of the bottom portion 21. The length in the second direction of the first slit 51 is, for example, greater than or equal to 0.1 mm and less than or equal to 5.0 mm. The length in the second direction of the first slit 51 may be uniform over an approximately entire region of the outer surface 21A of the bottom portion 21, or may vary within a plane. For example, a length in the second direction of a first slit 51 provided at a central part side of the bottom portion 21 may be set to be smaller than a length in the second direction of a first slit 51 provided at an outer circumferential side of the bottom portion 21. That is, a larger number of the third protrusions 50 may be disposed on the central part side of the bottom portion 21 in comparison to the outer circumferential side of the bottom portion 21.

A percentage of an area occupied by the third protrusions 50 with respect to the area of the outer surface 21A of the bottom portion 21 in the plan view viewing the outer surface 21A of the bottom portion 21 from above is desirably greater than or equal to 20%, is more desirably greater than or equal to 25%, and is further desirably greater than or equal to 30%. By setting the percentage of the area occupied by the third protrusions 50 with respect to the area of the outer surface 21A of the bottom portion 21 to be greater than or equal to 20%, it becomes easier to increase the surface area of the outer surface 21A of the bottom portion 21. As a result, the area of the housing can 20 contacting the outside air can be further increased, and the heat inside the battery can more easily be discharged to the outside air via the housing can 20. In addition, from the viewpoint of increasing the surface area of the outer surface 21A of the bottom portion 21 while securing the strength of the housing can 20, the percentage of the area occupied by the third protrusions 50 with respect to the area of the outer surface 21A of the bottom portion 21 in the plan view viewing the outer surface 21A of the bottom portion 21 from above is desirably less than or equal to 50%. Thus, the percentage of the area occupied by the third protrusions 50 with respect to the area of the outer surface 21A of the bottom portion 21 is desirably greater than or equal to 20% and less than or equal to 50%, is more desirably greater than or equal to 25% and less than or equal to 50%, and is further desirably greater than or equal to 30% and less than or equal to 50%.

In the present embodiment, a second slit 52 which extends along the first direction is formed on the outer surface 21A of the bottom portion 21. That is, the third protrusion 50 is divide by the second slit 52. With the provision of the second slit 52, the outside air accumulated at an outer side of the bottom portion 21 flows to the central part side of the bottom portion 21 via the second slit 52. As a result, the heat on the central part side of the bottom portion 21 can more easily be discharged to the outside air. Thus, with the provision of the second slit 52 on the outer surface 21A of the bottom portion 21, the heat dissipation property of the circular cylindrical battery 10 can be further improved.

The number of the second slit 52 is not limited to 1, and may be a plurality. When a plurality of second slits 52 are provided on the outer surface 21A of the bottom portion 21, the second slits 52 are desirably provided with equal spacing from each other in the second direction.

A length in the first direction (width) of the second slit 52 is not particularly limited, and is, for example, greater than or equal to 0.1 mm and less than or equal to 5.0 mm. in addition, the length in the first direction of the second slit 52 may be constant along the second direction or may vary along the second direction. For example, the length in the first direction of the slit 31 may be reduced toward the central part side of the bottom portion 21. In addition, while it is desirable that the second slit 52 extends across all of the third protrusions 50, a configuration may be employed in which a part of the third protrusions 50 is not crossed. That is, a part of the third protrusions 50 may extend in a continuous manner in the first direction.

Similar to the heights of the first protrusion 30 and the second protrusion 40, a height of the third protrusion 50 is desirably greater than or equal to 0.01 mm, is more desirably greater than or equal to 0.1 mm, and is further desirably greater than or equal to 0.3 mm. By setting the height of the third protrusion 50 to be greater than or equal to 0.01 mm, it becomes easier to increase the surface area of the outer surface 21A of the bottom portion 21. As a result, the area of the housing can 20 contacting the outside air can be further increased, and the heat inside the battery can more easily be discharged to the outside air via the housing can 20. In addition, an upper limit of the height of the third protrusion 50 is, for example, 5.0 mm. Thus, the height of the third protrusion 50 is desirably greater than or equal to 0.01 mm and less than or equal to 5.0 mm, is more desirably greater than or equal to 0.1 mm and less than or equal to 5.0 mm, and is further desirably greater than or equal to 0.3 mm and less than or equal to 5.0 mm.

A length in the second direction (width) of the third protrusion 50 can be suitably set within a range in which the surface area of the outer surface 21A of the bottom portion 21 can be set to be greater than or equal to 1.2 times the projected area of the outer surface 21A of the bottom portion 21. The length in the second direction (width) of the third protrusion 50 is, for example, greater than or equal to 0.01 mm and less than or equal to 5.0 mm.

The above-described embodiments can be suitably modified in design within a range in which the advantage of the present disclosure is not adversely affected. For example, in the first to third embodiments described above, the surface area of the outer surface 21A of the bottom portion 21 is set to be greater than or equal to 1.2 times the projected area of the outer surface 21A of the bottom portion 21 by providing protrusions on the outer surface 21A of the bottom portion 21, but the present disclosure is not limited to such configurations. For example, the surface area of the outer surface 21A of the bottom portion 21 may be set to be greater than or equal to 1.2 times the projected area of the outer surface 21A of the bottom portion 21 by providing recesses on the outer surface 21A of the bottom portion 21. In this case, an area of the recesses with respect to the area of the outer surface 21A of the bottom portion 21 in the plan view viewing the outer surface 21A of the bottom portion 21 from above is desirably greater than or equal to 20% and less than or equal to 50%, is more desirably greater than or equal to 25% and less than or equal to 50%, and is further desirably greater than or equal to 30% and less than or equal to 50%.

The present disclosure will be further described with the following embodiment.

Configuration 1: A circular cylindrical battery comprising: an electrode assembly in which a positive electrode and a negative electrode are wound with a separator therebetween; a housing can of a circular cylindrical shape, that has a bottom portion and that houses the electrode assembly; and a sealing assembly that closes an opening of the housing can, wherein a surface area of an outer surface of the bottom portion is greater than or equal to 1.2 times a projected area of the outer surface of the bottom portion.

Configuration 2: The circular cylindrical battery according to Configuration 1, wherein a plurality of first protrusions having an approximate annular shape are provided on the outer surface of the bottom portion.

Configuration 3: The circular cylindrical battery according to Configuration 2, wherein a slit which is provided along a radial direction and which divides the first protrusion in a circumferential direction is provided on the outer surface of the bottom portion.

Configuration 4: The circular cylindrical battery according to Configuration 3, wherein a plurality of the slits are provided on the outer surface of the bottom portion, and the plurality of slits are provided with equal angular spacing from each other in the circumferential direction.

Configuration 5: The circular cylindrical battery according to any one of Configurations 2 to 4, wherein a height of the first protrusion is greater than or equal to 0.01 mm and less than or equal to 5.0 mm.

Configuration 6: The circular cylindrical battery according to any one of Configurations 2 to 5, wherein a length in a radial direction of the first protrusion is greater than or equal to 0.01 mm and less than or equal to 5.0 mm.

Configuration 7: The circular cylindrical battery according to any one of Configurations 2 to 6, wherein a percentage of an area occupied by the first protrusions with respect to an area of the outer surface of the bottom portion, in a plan view viewing the outer surface of the bottom portion from above, is greater than or equal to 20% and less than or equal to 50%.

Configuration 8: The circular cylindrical battery according to Configuration 1, wherein a plurality of second protrusions are present in a scattered manner on the outer surface of the bottom portion.

Configuration 9: The circular cylindrical battery according to Configuration 8, wherein, in a plan view viewing the outer surface of the bottom portion from above, the plurality of second protrusions are disposed on lattice points of a triangular lattice, a quadrangular lattice, or a hexagonal lattice.

Configuration 10: The circular cylindrical battery according to Configuration 8 or 9, wherein a height of the second protrusion is greater than or equal to 0.01 mm and less than or equal to 5.0 mm.

Configuration 11: The circular cylindrical battery according to any one of Configurations 8 to 10, wherein a percentage of an area occupied by the second protrusions with respect to an area of the outer surface of the bottom portion, in a plan view viewing the outer surface of the bottom portion from above, is greater than or equal to 20% and less than or equal to 50%.

Configuration 12: The circular cylindrical battery according to Configuration 1, wherein a plurality of third protrusions which extend along a first direction are provided on the outer surface of the bottom portion, and the third protrusions are disposed with spacing in a second direction orthogonal to the first direction, in a plan view viewing the outer surface of the bottom portion from above.

Configuration 13: The circular cylindrical battery according to Configuration 12, wherein a height of the third protrusion is greater than or equal to 0.01 mm and less than or equal to 5.0 mm.

Configuration 14: The circular cylindrical battery according to Configuration 12 or 13, wherein a percentage of an area occupied by the third protrusions with respect to an area of the outer surface of the bottom portion, in a plan view viewing the outer surface of the bottom portion from above, is greater than or equal to 20% and less than or equal to 50%.

### REFERENCE SIGNS LIST

10 circular cylindrical battery, 11 positive electrode, 12 negative electrode, 13 separator, 14 electrode assembly, 15 insulating plate, 16 insulating plate, 17 positive electrode lead, 18 negative electrode lead, 19 sealing assembly, 20 housing can, 21 bottom portion, 21A outer surface, 22 side wall portion, 23 groove portion, 24 internal terminal plate, 24A outer circumferential portion, 24B center portion, 24C vent hole, 25 insulating member, 25A opening, 25B vent hole, 26 external terminal plate, 26A vent member, 27 gasket, 30 first protrusion, 31 slit, 32 flat region, 33 inclined surface, 40 second protrusion, 50 third protrusion, 51 first slit, 52 second slit.

## Claims

1. A circular cylindrical battery comprising:
an electrode assembly in which a positive electrode and a negative electrode are wound with a separator therebetween;
a housing can of a circular cylindrical shape, that has a bottom portion and that houses the electrode assembly; and
a sealing assembly that closes an opening of the housing can, wherein
a surface area of an outer surface of the bottom portion is greater than or equal to 1.2 times a projected area of the outer surface of the bottom portion.

2. The circular cylindrical battery according to claim 1, wherein
a plurality of first protrusions having an approximate annular shape are provided on the outer surface of the bottom portion.

3. The circular cylindrical battery according to claim 2, wherein
a slit which is provided along a radial direction and which divides the first protrusion in a circumferential direction is provided on the outer surface of the bottom portion.

4. The circular cylindrical battery according to claim 3, wherein
a plurality of the slits are provided on the outer surface of the bottom portion, and
the plurality of slits are provided with equal angular spacing from each other in the circumferential direction.

5. The circular cylindrical battery according to claim 2, wherein
a height of the first protrusion is greater than or equal to 0.01 mm and less than or equal to 5.0 mm.

6. The circular cylindrical battery according to claim 2, wherein
a length in a radial direction of the first protrusion is greater than or equal to 0.01 mm and less than or equal to 5.0 mm.

7. The circular cylindrical battery according to claim 2, wherein
a percentage of an area occupied by the first protrusions with respect to an area of the outer surface of the bottom portion, in a plan view viewing the outer surface of the bottom portion from above, is greater than or equal to 20% and less than or equal to 50%.

8. The circular cylindrical battery according to claim 1, wherein
a plurality of second protrusions are present in a scattered manner on the outer surface of the bottom portion.

9. The circular cylindrical battery according to claim 8, wherein
in a plan view viewing the outer surface of the bottom portion from above, the plurality of second protrusions are disposed on lattice points of a triangular lattice, a quadrangular lattice, or a hexagonal lattice.

10. The circular cylindrical battery according to claim 8, wherein
a height of the second protrusion is greater than or equal to 0.01 mm and less than or equal to 5.0 mm.

11. The circular cylindrical battery according to claim 8, wherein
a percentage of an area occupied by the second protrusions with respect to an area of the outer surface of the bottom portion, in a plan view viewing the outer surface of the bottom portion from above, is greater than or equal to 20% and less than or equal to 50%.

12. The circular cylindrical battery according to claim 1, wherein
a plurality of third protrusions which extend along a first direction are provided on the outer surface of the bottom portion, and
the third protrusions are disposed with spacing in a second direction orthogonal to the first direction, in a plan view viewing the outer surface of the bottom portion from above.

13. The circular cylindrical battery according to claim 12, wherein
a height of the third protrusion is greater than or equal to 0.01 mm and less than or equal to 5.0 mm.

14. The circular cylindrical battery according to claim 12, wherein
a percentage of an area occupied by the third protrusions with respect to an area of the outer surface of the bottom portion, in a plan view viewing the outer surface of the bottom portion from above, is greater than or equal to 20% and less than or equal to 50%.
